(19) Europäisches Patentamt / European Patent Office / Office européen des brevets

(11) **EP 4 095 749 B1**

(12) **EUROPEAN PATENT SPECIFICATION**

(45) Date of publication and mention
of the grant of the patent:
**08.11.2023 Bulletin 2023/45**

(21) Application number: **21718926.5**

(22) Date of filing: **20.01.2021**

(51) International Patent Classification (IPC):
**G06V 40/20** (2022.01)   **G06V 40/30** (2022.01)
**G06N 3/04** (2023.01)   **G06F 21/32** (2013.01)
**G06T 7/136** (2017.01)   **G06F 18/21** (2023.01)

(52) Cooperative Patent Classification (CPC):
**G06N 3/04; G06F 18/217; G06F 18/2413;
G06V 40/20; G06V 40/30; G06V 40/382**

(86) International application number:
**PCT/ES2021/070029**

(87) International publication number:
**WO 2021/148692 (29.07.2021 Gazette 2021/30)**

(54) **METHOD AND SYSTEM FOR VERIFYING DYNAMIC HANDWRITING AND SIGNATURES BY MEANS OF DEEP LEARNING**

VERFAHREN UND SYSTEM ZUM ÜBERPRÜFEN VON DYNAMISCHER HANDSCHRIFT UND UNTERSCHRIFTEN MITTELS TIEFENLERNEN

PROCÉDÉ ET SYSTÈME DE VÉRIFICATION DE SIGNATURES ET D'ÉCRITURES MANUSCRITES DYNAMIQUES PAR APPRENTISSAGE PROFOND

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2020 ES 202030060**

(43) Date of publication of application:
**30.11.2022 Bulletin 2022/48**

(73) Proprietor: **Universidad Autónoma de Madrid
28049 Madrid (ES)**

(72) Inventors:
• **VERA RODRÍGUEZ, Rubén**
  **28049 Madrid (ES)**
• **TOLOSANA MORANCHEL, Rubén**
  **28049 Madrid (ES)**
• **ORTEGA GARCÍA, Javier**
  **28049 Madrid (ES)**
• **FIÉRREZ AGUILAR, Julián**
  **28049 Madrid (ES)**
• **MORALES MORENO, Aythami**
  **28049 Madrid (ES)**

(74) Representative: **Clarke, Modet y Cía., S.L.
C/ Suero de Quiñones 34-36
28002 Madrid (ES)**

(56) References cited:
**CN-A- 106 778 586**

• **IWANA BRIAN KENJI ET AL: "Introducing Local Distance-Based Features to Temporal Convolutional Neural Networks", 2018 16TH INTERNATIONAL CONFERENCE ON FRONTIERS IN HANDWRITING RECOGNITION (ICFHR), IEEE, 5 August 2018 (2018-08-05), pages 92-97, XP033468568, DOI: 10.1109/ICFHR-2018.2018.00025 [retrieved on 2018-12-05]**
• **TOLOSANA RUBEN ET AL: "Exploring Recurrent Neural Networks for On-Line Handwritten Signature Biometrics", IEEE ACCESS, vol. 6, 1 January 2018 (2018-01-01), pages 5128-5138, XP055803707, USA ISSN: 2169-3536, DOI: 10.1109/ACCESS.2018.2793966 cited in the application**

- KHOLMATOV A ET AL: "Identity authentication using improved online signature verification method", PATTERN RECOGNITION LETTERS, ELSEVIER, AMSTERDAM, NL, vol. 26, no. 15, 1 November 2005 (2005-11-01), pages 2400-2408, XP027779690, ISSN: 0167-8655 [retrieved on 2005-11-01]
- TOLOSANA RUBEN ET AL: "BioTouchPass2: Touchscreen Password Biometrics Using Time-Aligned Recurrent Neural Networks", IEE TRANSACTIONS ON INFORMATION FORENSICS AND SECURITY, IEEE , PISCATWAY , NJ, US, vol. 15, 13 February 2020 (2020-02-13), pages 2616-2628, XP011775530, ISSN: 1556-6013, DOI: 10.1109/TIFS.2020.2973832 [retrieved on 2020-03-03]
- AZHAR AHMAD JAINI ET AL: "Improved Dynamic Time Warping (DTW) Approach for Online Signature Verification", ARXIV.ORG, CORNELL UNIVERSITY LIBRARY, 201 OLIN LIBRARY CORNELL UNIVERSITY ITHACA, NY 14853, 26 March 2019 (2019-03-26), XP081160420,
- LI CHUANG ET AL: "A Stroke-Based RNN for Writer-Independent Online Signature Verification", 2019 INTERNATIONAL CONFERENCE ON DOCUMENT ANALYSIS AND RECOGNITION (ICDAR), IEEE, 20 September 2019 (2019-09-20), pages 526-532, XP033701412, DOI: 10.1109/ICDAR.2019.00090 [retrieved on 2020-01-31] cited in the application
- VORUGUNTI CHANDRA SEKHAR ET AL: "OSVNet: Convolutional Siamese Network for Writer Independent Online Signature Verification", 2019 INTERNATIONAL CONFERENCE ON DOCUMENT ANALYSIS AND RECOGNITION (ICDAR), IEEE, 20 September 2019 (2019-09-20), pages 1470-1475, XP033701348, DOI: 10.1109/ICDAR.2019.00236 [retrieved on 2020-01-31] cited in the application
- RUBEN TOLOSANA ET AL: "BioTouchPass Demo", MULTIMEDIA, ACM, 2 PENN PLAZA, SUITE 701NEW YORKNY10121-0701USA, 15 October 2019 (2019-10-15), pages 1023-1025, XP058442596, DOI: 10.1145/3343031.3350578 ISBN: 978-1-4503-6889-6
- RUBEN TOLOSANA ET AL: "DeepSign: Deep On-Line Signature Verification", ARXIV.ORG, CORNELL UNIVERSITY LIBRARY, 201 OLIN LIBRARY CORNELL UNIVERSITY ITHACA, NY 14853, 24 February 2020 (2020-02-24), XP081606480,

**Description**

**OBJECT OF THE INVENTION**

The present invention is included in the field of methods and systems for verifying and recognising dynamic handwriting and signatures by means of comparing samples.

**BACKGROUND OF THE INVENTION**

Technology for verifying dynamic handwritten signatures and for recognising dynamic handwriting has evolved significantly over the past 40 years. This technology has gone from requiring very high-performance devices specially designed for acquiring high-quality dynamic handwritten samples which produce high performance rates of the systems, to being able to use general-purpose devices such as tablets or smartphones even using the fingers as a writing utensil. However, the core of the main systems for comparing signatures and handwriting is still based on traditional algorithms such as Dynamic Time Warping (DTW), Hidden Markov Models (HMM), and Support Vector Machines (SVM). This aspect is a bit unusual if we compare these biometric features with others such as facial or fingerprint recognition wherein deep neural network-based technology has managed to far exceed the performance of traditional systems.

One of the main causes for this to happen is that there are no large public databases with which systems of this type can be correctly trained to recognise dynamic writing and signatures, contrary to what occurs with other features where accessibility to large databases is simple.

Until now, neural network-based systems in this area have not been able to obtain significant improvements with respect to traditional systems. In [1], a system based on recurrent neural networks (RNN) is presented for the task of verifying handwritten signatures which manages to improve the performance of a traditional DTW-based system for the case of comparing genuine signatures to imitations (skilled forgeries); however, in the case of comparing signatures of different users (random forgeries) the system achieves much worse results than a traditional DTW-based system. In [2], an RNN-based system is proposed using stroke information instead of temporal samples. Although the results obtained for the BiosecurID database are better than in [1] for the case of imitations, this is not the case for other databases, with much worse results, for which reason this method does not generalise well. Furthermore, this study does not show the results obtained in the case of comparing random forgeries, being limited only to the case of imitations. Finally, in [3], a method based on a convolutional neural network (CNN, traditionally used for images) is proposed in order to extract characteristics starting from global characteristics of the signatures, and not directly from the temporal samples. This method does not have good capacity for generalisation since it obtains very different results depending on the database considered. Furthermore, it also does not show results for the case of comparing random forgeries. In the evaluation of a dynamic signature comparison system, it is essential to show the results for both comparisons of random forgeries and skilled forgeries, since in this manner the performance can be analysed compared to the two main types of attacks on systems of this type.

Therefore, it is necessary to have a method for verifying dynamic handwriting and signatures that can be used for different types of capture devices and databases, and that obtains good performance also in the case of using signatures and writing made with the fingers, as well as for the cases of comparing random forgeries and skilled forgeries.

The method proposed in the present invention solves the aforementioned problems, and can be used both to verify signatures and to verify handwritten passwords made using both a stylus and a finger on a touch screen, obtaining very good performance rates, better than the current state of the art.

References

[1] R. Tolosana, R. Vera-Rodriguez, J. Fierrez, and J. Ortega-Garcia, "Exploring Recurrent Neural Networks for On-Line Handwritten Signature Biometrics", IEEE Access, vol. 6, pp. 5128-5138, 2018.

[2] C. Li, X. Zhang, F. Lin, Z. Wang, J. Liu, R. Zhang and H. Wang, "A Stroke-based RNN for Writer-Independent Online Signature Verification," in Proc. International Conference on Document Analysis and Recognition (ICDAR), 2019.

[3] C. Sekhar, P. Mukherjee, D.S. Guru and V. Pulabaigari, "OSVNet: Convolutional Siamese Network for Writer Independent Online Signature Verification," in Proc. International Conference on Document Analysis and Recognition (ICDAR), 2019.

**DESCRIPTION OF THE INVENTION**

The present invention relates to a method and system for verifying and recognising dynamic handwriting and signatures by means of comparing samples or embodiments.

An object of the present invention is a method for comparing samples of dynamic handwritten signature and handwriting based on a temporal alignment of the samples of a set of temporal functions of characteristic information and for comparing by means of a recurrent neural network traditionally used in temporal sequences of data, such as dynamic handwriting and signatures. This object is achieved with the method of claim 1.

The method proposed in the present invention enables, through the previous temporal alignment of temporal characteristics of the samples to be compared, a better training of the systems based on recurrent neural networks, extracting more robust characteristics for comparing both the signatures of other users (random forgeries) and imitations (skilled forgeries), with excellent results. The method generalises very well in order to be used with different types of capture devices and databases, as well as for signatures and/or writing made with the fingers, surpassing the results in the state of the art. Furthermore, the proposed method has also been evaluated for handwritten passwords, surpassing the state of the art.

More specifically, the proposed method comprises the following steps: i) extraction of temporal functions, ii) temporal alignment of the patterns, iii) extraction of a new characteristic space and comparison using a recurrent neural network in order to obtain a similarity measure, and iv) verification of the identity of the test sample based on a comparison of the similarity measure with a threshold value.

The recurrent neural network is trained prior to the normal operation of the system. The method of the present invention can comprise said previous step of training the recurrent neural network. The training is according to a machine learning method which is performed iteratively by minimising a cost function. First, training sets are generated which include samples to be compared with each other. Each training set is made up of a number N of recorded samples all belonging to the same identity I (anchor) and a test sample. To train the method, examples are needed of the test sample which come from the same identity with which it is compared, but examples are also needed of the test sample which either come from other identities different from the identity I or are imitations of samples of the identity I.

In the first step of the training, the extraction of temporal functions is carried out by obtaining direct derived functions from the basic dynamic information acquired for each sample (wherein the basic dynamic information includes at least temporal samples of the X and Y coordinates, and optionally pressure, of the sample), generating a derived pattern of each sample (N recorded patterns and a test pattern).

The second step of the training carries out the temporal alignment between the patterns of each set of recorded patterns to be compared with the test pattern. To do so, each of the recorded patterns is aligned with the test pattern using a temporal alignment algorithm the purpose of which is to minimise the cost function based on an optimal alignment between the patterns that are compared, giving as a result a temporal correspondence between the temporal samples which enables new patterns to be created that are already aligned and therefore with the same temporal length.

In the third step of the training, the previously aligned patterns are introduced as an input in the recurrent neural network following an iterative training process, wherein the network carries out a process of transforming the patterns to another characteristic space. In the neural network, several recurring layers are applied which generate a new global and compact representation of each input temporal sequence. In this new representation, each of the new characteristics contains information about all the instants of time of the input temporal sequence. A cost function is minimised which manages to reduce the distance when the set of recorded samples with identity I and the test sample come from the same identity, and manages to maximise that distance in the case wherein the test sample comes from an identity different from the identity I, or a sample which imitates the samples of the identity I. Finally, the recurrent neural network obtains a similarity measure between the recorded samples and the test sample, such that the more similar the compared samples are, the greater the value of the similarity measure. According to one embodiment, the recurrent neural network assigns a value close to one for comparing samples of the same identity and a value close to zero in the case of having a test sample of different identity or imitation of the samples with those being compared.

The similarity measure is compared with a certain decision threshold. If the similarity measure does not exceed the threshold value, the system then determines that the test sample belongs to an identity different from the identity I of the recorded samples of the set with which it is compared. If the similarity measure does exceed this threshold, the system determines that the test sample belongs to the same identity I as the rest of the samples with which it is compared.

The proposed method can be applied both for the comparison of dynamic handwritten signatures and for the comparison of dynamic handwriting samples. In both cases, the proposed method obtains performance improvements in terms of very significant system error rates compared to other approaches of the state of the art.

Another object of the present invention is a system for verifying and recognising dynamic handwriting and signatures. The system comprises at least one memory, at least one programme stored in memory, and one or more processors configured to execute the at least one programme, which includes instructions for carrying out the previously defined method for verifying dynamic handwriting and signatures.

The present invention also relates to a programme product for verifying dynamic handwriting and signatures, which comprises programme instruction means for carrying out the previously defined method when the programme is executed on one or more processors. The programme product is preferably stored on a programme support medium.

Throughout the description and in the claims, the word "comprises" and its variants are not intended to exclude other technical features, additives, components or steps. For those skilled in the art, other objects, advantages and features of the invention may be deduced from both the invention and the practical use of the invention. The following examples and drawings are provided by way of illustration and are not intended to be limiting of the present invention. Furthermore, the invention covers all possible combinations of particular and preferred embodiments indicated herein.

## BRIEF DESCRIPTION OF DRAWINGS

To complement the description that is being made and for the purpose of helping to better understand the features of the invention according to a preferred practical exemplary embodiment thereof, a set of drawings and tables is attached as an integral part of said description in which the following is depicted in an illustrative and non-limiting manner:

Figure 1 shows a block diagram of the proposed method for comparing dynamic handwriting and signatures.

Figure 2 shows the process of generating training sets used in the training of the proposed method for comparing dynamic writing and signatures.

Figures 3A and 3B show examples of two embodiments of signatures (Figure 3A) and writing (Figure 3B) with the basic information acquired (X, Y coordinates and pressure P for the case of a signature and only X and Y coordinates for the case of writing) based on the temporal samples thereof.

Figure 4 shows a list of temporal functions which can be extracted starting from an embodiment containing the basic functions X, Y and pressure as a function of the time.

Figures 5A and 5B show examples of extracting temporal functions for the examples of Figures 3A and 3B, respectively. This set of temporal functions could be different by selecting from the functions shown or by including additional functions.

Figures 6A and 6B show the result of the temporal alignment on the previous examples. For the case of signatures, the DTW alignment algorithm is used, and for the case of writing, the SW-DTW algorithm is used. It would be possible to use other different temporal alignment algorithms in each case.

Figures 7A and 7B show examples of the structure of the neural network used for the example of signatures (Figure 6A) and writing (Figure 6B).

Figures 8A and 8B show the performance based on the EER (Equal Error Rate) of systems based on DTW, RNN and prior DTW time-aligned RNN (TA-RNN) for verifying handwritten dynamic signature using three databases, for the case of comparing with imitations (skilled forgeries) and signatures of other users (random forgeries). Furthermore, the case of comparing a recorded signature against a test signature is included, as well as the case of comparing four recorded signatures against a test signature.

Figure 9 shows EER values for a DTW-based system compared to a system based on SW-DTW time-aligned RNN for comparing handwritten passwords with different lengths.

## PREFERRED EMBODIMENT OF THE INVENTION

A detailed description is explained below including two preferred exemplary embodiments of the method for comparing dynamic handwriting and signatures according to the present invention. As indicated above, the method of the present invention enables technology for comparing dynamic signature and handwriting samples to be developed in order to decide whether the samples being compared belong to the same identity or to a different identity.

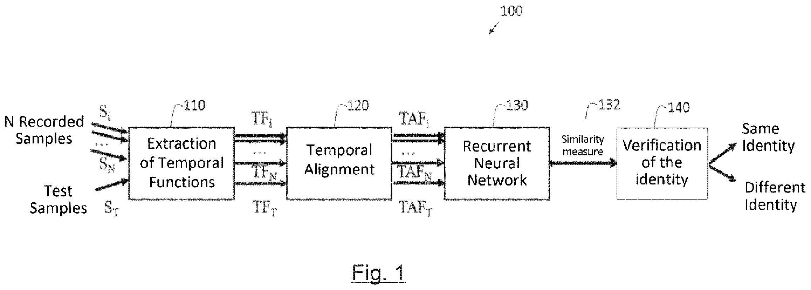

**Figure 1** shows the block diagram of the method 100 proposed in the present invention. The method comprises the following steps: i) extraction of temporal functions 110, derived from at least the X and Y coordinates of each sample, from a set of samples in order to obtain patterns; ii) temporal alignment of the patterns 120; iii) application of a recurrent neural network 130 in the aligned patterns in order to extract a new characteristic space and comparison; and iv) verification of the identity 140 based on the comparison (or comparisons) performed in the recurrent neural network.

The initial set of samples is formed by one or more recorded samples $S_i$, all belonging to one same identity, and by a test sample $S_T$. In the step of extracting temporal functions 110, a recorded pattern $TF_i$ (i.e., temporal function extracted from the sample) of each recorded sample $S_i$ and a test pattern $TF_T$ of the test sample $S_T$ is obtained. For each sample, the signals related to the coordinates (X, Y) of the sample, and optionally the pressure (P) of the sample, are used to extract a set of temporal functions. In the step of temporal alignment 120 of the at least one recorded pattern $TF_i$ with the test pattern $TF_T$, at least one aligned recorded pattern ($TAF_i$) and an aligned test pattern ($TAF_T$) are obtained. In the step of comparing the aligned patterns by using a recurrent neural network 130, preferably with a Siamese architecture (which obtains a compact, global vector of characteristics and without dependence on temporal samples), a similarity measure 132 between the at least one recorded sample $S_i$ and the test sample $S_T$ is obtained. Finally, in the step of verifying the identity 140 of the test sample $S_T$ it is determined, based on a comparison of the similarity measure 132 with a threshold value, whether the identity of the test sample $S_T$ is the same as the identity of the at least one recorded sample $S_i$ or if it is a different identity.

The recurrent neural network 130 has previously been trained with a set of user or class samples different from those that will be used in the exploitation thereof. The training of the recurrent neural network 130 is performed iteratively by minimising a cost function. In order to train the system, the following steps are followed:

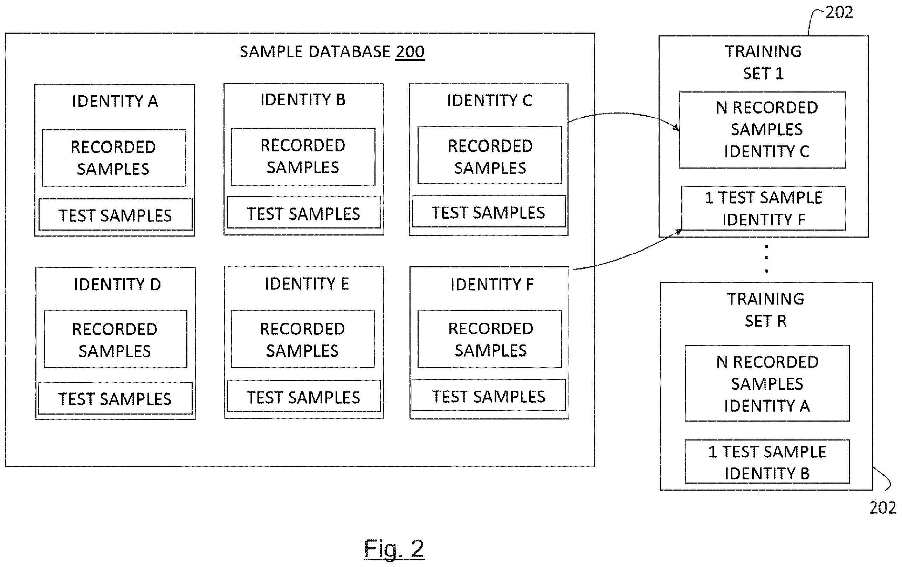

a. A database of sets of samples to be compared with each other is generated, wherein each training set 202 is made up of a number N of recorded samples ($S_i$, with i=1...N), all belonging to one same identity I (anchor), and a test sample $S_T$. To train the method, examples are needed of the test sample $S_T$ which come from the same identity with which it is compared, but examples are also needed of the test sample $S_T$ which either come from other identities different from the identity I or are imitations of samples of the identity I. **Figure 2** shows, by way of example, how the training sets for the training of the proposed method are formed by using a sample database 200 which stores a set of recorded samples $S_i$ and test samples $S_T$ corresponding to different identities/classes (i.e., identities A, B, C, D, E and F). The identities of the samples used in the training step are different from the identities of the samples used in the evaluation and exploitation thereof. It should be noted that the size of the databases used is a very important aspect in the proposed method, since in order to correctly train the recurrent neural network 130 the larger the sample database 200 in terms of number of users (i.e., different identities) and number of samples, the better the end result will be. In the example of comparisons of handwritten signatures, it started from a database made up of 1,526 users containing embodiments of genuine dynamic signatures, as well as imitations thereof, all made on different models of digitising tablets and using a stylus as a writing utensil in different capture sessions. Specifically, 1,084 user signatures were used for the training phase, of which about 309,000 training sets were generated. For the example of comparing handwritten passwords, a database made up of 217 users who made a total of 72 characters on the touch screen of a smartphone (94 models in total) was used. Furthermore, another database of 93 users with the digits from 0 to 9 was also used. For these cases, users used their finger as a writing utensil in several capture sessions separated in time. Specifically, handwritten characters of 225 users were used for the training phase, of which about 88,000 training sets were generated.

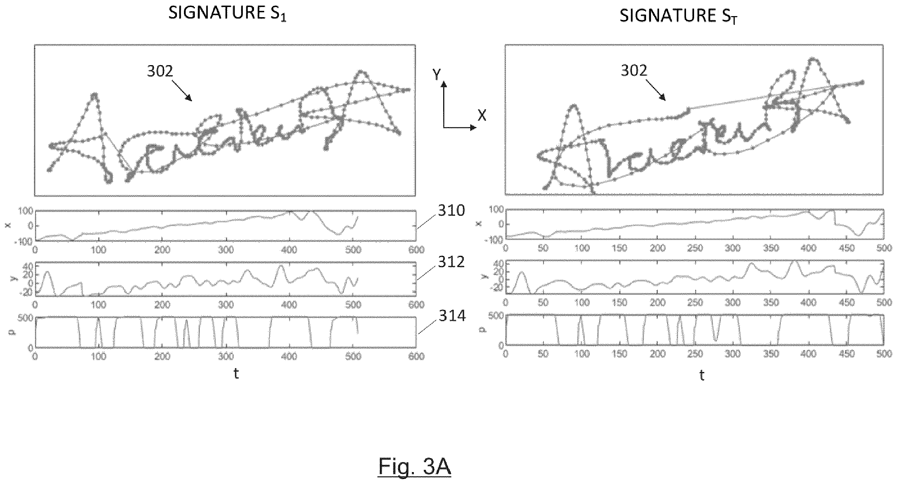

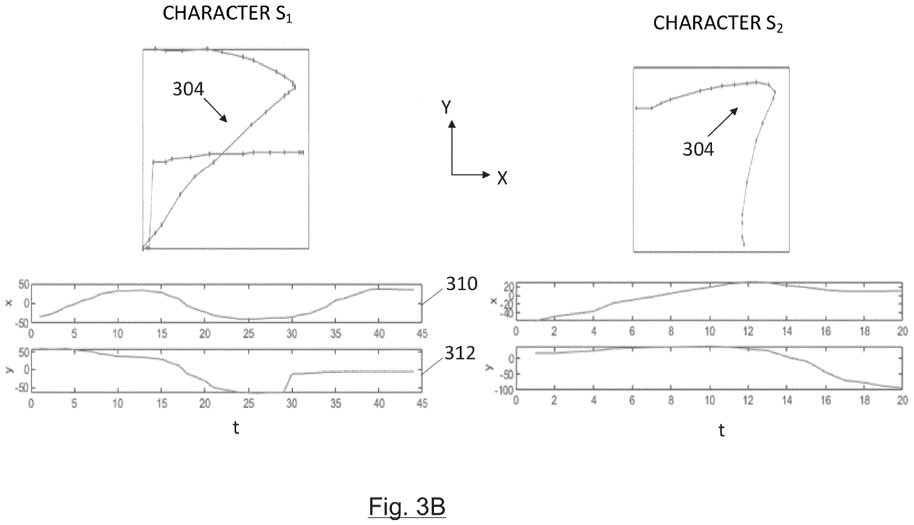

**Figure 3A** shows an example of two genuine samples of dynamic handwritten signature 302 ($S_1$ and $S_T$, both coming from the same identity) with the basic temporal functions thereof: X coordinate (310), Y coordinate (312) and pressure P (314) as a function of the acquired temporal samples t (time is being sampled by using a certain sampling frequency). **Figure 3B** shows an example of two samples of dynamic handwriting 304 (handwritten characters) from different users ($S_1$ and $S_T$ having been performed by different identities) with the basic temporal functions thereof, X (310) and Y (312) as a function of the temporal coordinates thereof.

In the training, it is recommended that half of the test samples be signatures of the same identity as the recorded samples and the other half of the test samples be half skilled forgeries and half random forgeries so that the sets are balanced and the recurrent neural network trains well. It is recommended that these proportions appear in each iteration of the training.

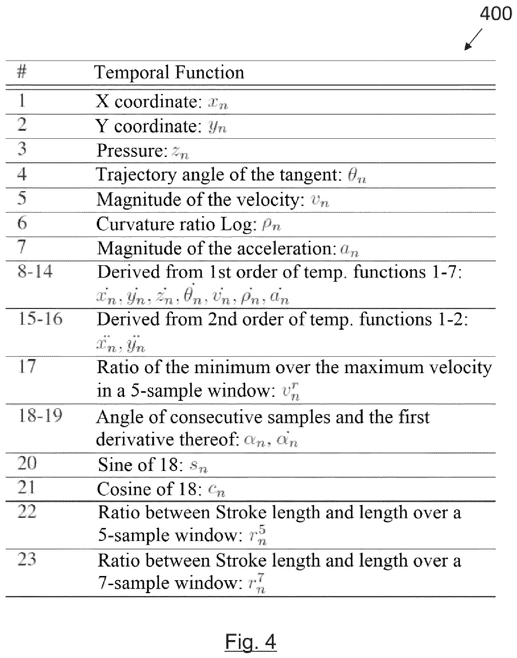

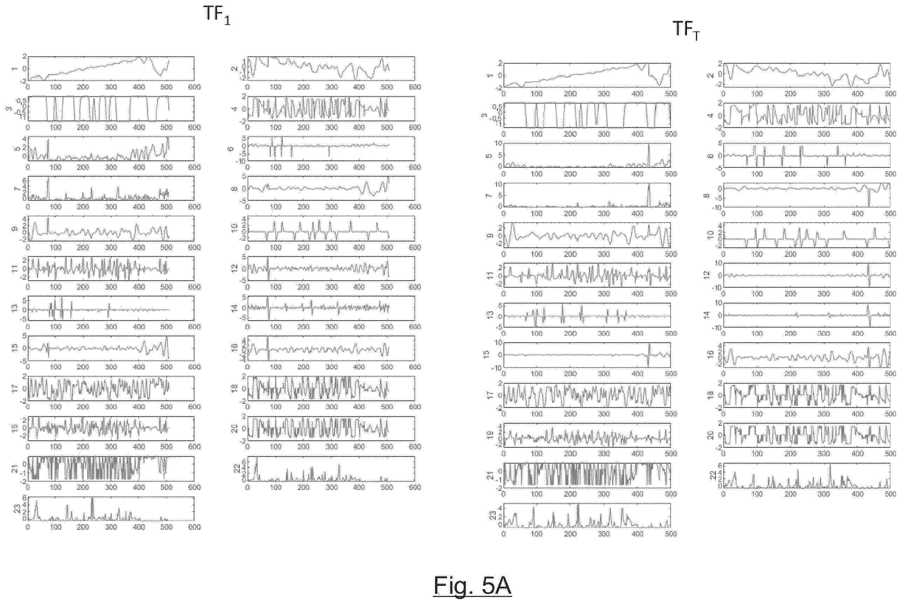

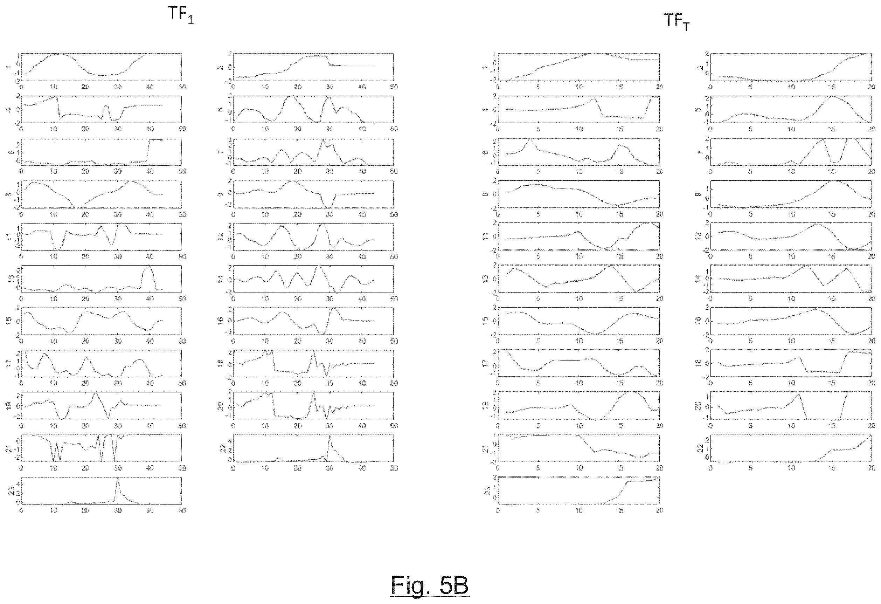

b. Next, the process of extracting temporal functions 110 is carried out starting from the initial basic temporal functions (310, 312, 314) of each sample, obtaining dynamic patterns starting from the initial samples of dynamic handwritten signatures 302 or dynamic handwriting 304: recorded patterns $TF_i$ (associated with the recorded samples $S_i$) and a test pattern $TF_T$ (associated with the test sample $S_T$). **Figure 4** shows a list of temporal functions 400 along with the description thereof commonly used in the signature and handwriting verification processes. **Figure 5A** shows an example of extracting temporal functions 110 (specifically, 23 extracted temporal functions) for the signatures $S_1$ and $S_T$ shown in the example of Figure 3A. **Figure 5B** shows an example of 21 temporal functions extracted for the handwritten characters $S_1$ and $S_T$ shown in the example of Figure 3B, obtaining the patterns $TF_1$ and $TF_T$. In this case, the 21 temporal functions are all the ones shown in Figure 4 with the exception of temporal function number 3 and 10, since the dynamic handwriting samples 304 did not have information on the instantaneous pressure. It is important to mention that the set of temporal functions could be different for different applications by selecting the ones shown or including additional functions not shown in the examples.

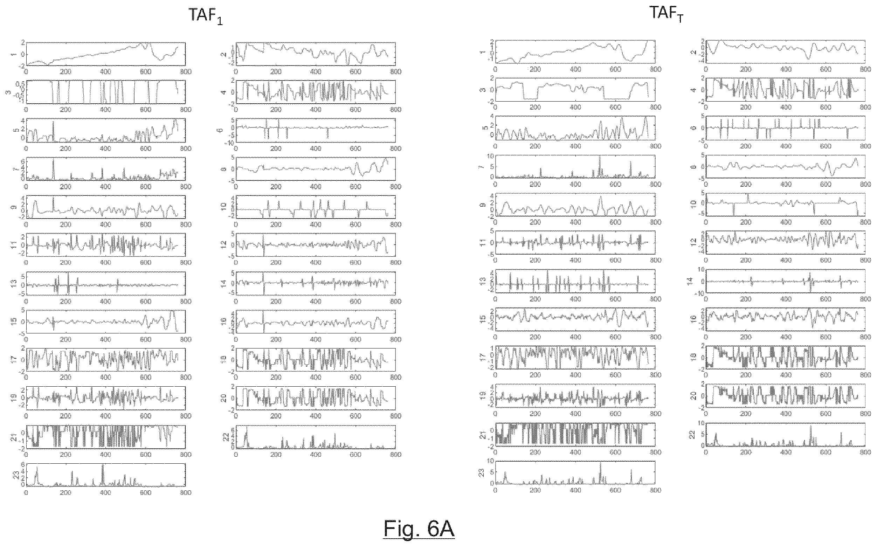

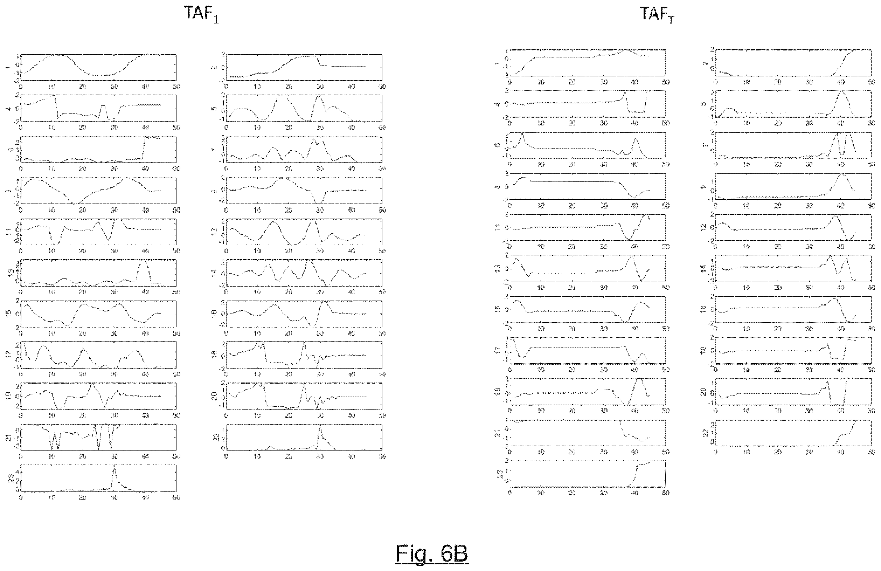

c. Next, the temporal alignment process 120 is carried out on the patterns of each set of recorded patterns $TF_i$ which will be compared with the test pattern $TF_T$. To do so, each of the recorded patterns $TF_i$ is aligned with the test pattern $TF_T$ using a temporal alignment algorithm (for example, an elastic temporal alignment algorithm), the task of which is to minimise the cost function based on an optimal alignment between the patterns being compared, giving as a result a temporal correspondence between the temporal samples which enables new patterns to be created which are already aligned and therefore with equal temporal length: aligned recorded patterns $TAF_i$ and aligned test pattern $TAF_T$. There are different temporal alignment algorithms that can be used to align the signature and handwriting samples, such as DTW (Dynamic Time Warping), DDTW (Derivative DTW), SW-DTW (Sliding Window DTW), TAM (Time Alignment Measurement), GTW (Generalised Time Warping), TTW (Trainable Time Warping), etc. In the examples shown, the DTW algorithm is used for the case of aligning dynamic handwritten signatures 302 (**Figure 6A**) and the SW-DTW algorithm for aligning dynamic handwriting 304 (**Figure 6B**).

In the DTW algorithm, given two temporal sequences, in this case they would be:

$$TF_1 = tf1_1, tf1_2, \ldots, tf1_n, \ldots, tf1_N$$
$$TF_T = tft_1, tft_2, \ldots, tft_m, \ldots, tft_M \qquad (1)$$

wherein N and M are the total number of temporal samples of the sequence $TF_1$ and $TF_T$, respectively. A measure of distance d is defined:

$$d(tf1_n, tft_m) = (tf1_n - tft_m)^2 \qquad (2)$$

An alignment path C between the sequences is defined as:

$$C = c_1, c_2, \ldots, c_k, \ldots, c_K \qquad (3)$$

wherein each $c_k$ represents the correspondence (n,m) between temporal samples of the sequences $TF_1$ and $TF_T$. The initial condition of the algorithm is:

$$g_1 = g(1,1) = d(tf1_1, tft_1) \bullet w(1) \qquad (4)$$

wherein $g_k$ represents the accumulated distance after performing k steps and w(k) is a weight factor that must be defined. In each iteration, $g_k$ is calculated in this case as:

$$g_k = g(n,m) = min[\, g(n,m-1) + d(tf1_n, tft_m) \,;\, g(n-1,m-1) + d(tf1_n, tft_m) \,;$$
$$g(n-1,m) + d(tf1_n, tft_m) \,] \quad (5)$$

until reaching the nth and mth temporal sample of each sequence, respectively. The cost function to be minimised is the accumulated distance $g_k$, since in this manner the alignment path between both sequences is obtained.

For the example based on dynamic handwriting 304 (Figure 6B), the temporal alignment algorithm used is SW-DTW, which is a modified version of the DTW algorithm taking into account small overlapping windows of samples instead of individual samples when obtaining the optimal alignment path. In this manner, the equation (2) would be modified by including a weighted average between the distances between neighbouring temporal samples.

d. Next, the aligned patterns are introduced in the recurrent neural network 130 following an iterative training process, wherein the network carries out a process of transforming the patterns to another characteristic space. In the neural network, several recurring layers are applied which generate a new global and compact representation of each input temporal sequence. In this new representation, each of the new characteristics contains information about all the instants of time of the input temporal sequence. Finally, a cost function is minimised which manages to reduce the distance when the set of recorded samples $S_i$ with identity I and the test sample $S_T$ come from the same identity, and manages to maximise that distance in the case wherein the test sample $S_T$ comes from an identity different from the samples of the identity I, or a sample which imitates the samples of the identity I.

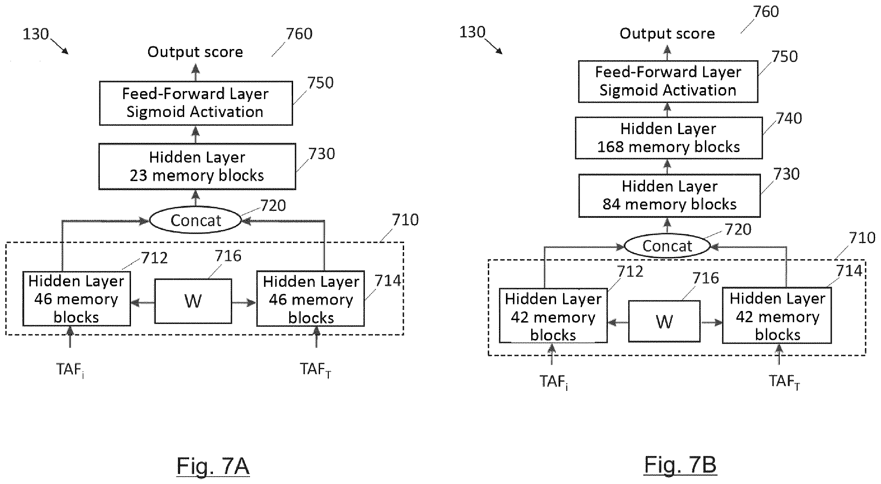

**Figures 7A** and **7B** show, according to a possible embodiment, the architecture of the recurrent neural network 130 used for the cases of comparing signature and dynamic writing, respectively. The architecture of the recurrent neural network 130 varies for each case, and the LSTM (Long Short-Term Memory) or GRU (Gated Recurrent Units) network types can be used, both in a unidirectional manner or in a bidirectional manner. The specific parameters of the network that may vary are the number of recurring and feed-forward layers, the number of memory blocks in each layer, the learning rate, the type of optimiser, and if dropout is used, among other parameters.

For the case of comparing dynamic signatures, the recurrent neural network 130 is made up of, according to the example shown in Figure 7A, a Siamese architecture with two signature patterns used as inputs with the previously aligned temporal functions $TAF_i$ (i.e., the 23 aligned temporal functions shown in Figure 6A). The first layer 710 is made up of two parallel hidden layers (712, 714) of the bidirectional GRU type with 46 memory blocks, each of which share the weights W (716) thereof. The outputs of this first block or first layer 710 are concatenated 720 and are the input of the second layer 730 which is of the bidirectional GRU type with 23 memory blocks. The output of this layer, which has a size of 23 elements, constitutes the representation of the input sequence in the new characteristic space. This new representation is very compact and has no notion of time like the input sequence, but rather the temporal information is embedded inside of it. Finally, the output of this block enters a feed-forward layer 750 with sigmoid activation which produces a score 760 from the comparison of the two initial inputs of the example of Figure 7A as an output. For this example, a recorded sample and a test sample are used, for which reason there are only two inputs in the recurrent neural network (Siamese architecture), but it can be extended to multiple inputs simultaneously (in general, N inputs can be had in one Siamese recurrent neural network).

The comparison of N recorded samples ($S_1$, $S_2$,..., $S_N$) against a test sample $S_T$ can be performed, among others, in at least two different manners:

- By using a recurrent neural network 130 with two inputs, as represented in Figures 7A and 7B, one input for the recorded sample (aligned recorded pattern $TAF_i$) and another input for the test sample (aligned test pattern $TAF_T$), and making N comparisons of a recorded sample against a test sample (i.e., $S_1$ vs $S_T$, $S_2$ vs $S_T$, ..., $S_N$ vs $S_T$) and then calculating the mean of the output scores 760 of the comparisons (or another representative value of the comparison, such as the minimum, maximum, etc.) and thus obtaining a final score which represents the similarity measure 132 of the test sample with respect to the recorded samples.
- By training a Siamese recurrent neural network 130 with N+1 inputs (N recorded samples and 1 test sample) in order to obtain a single output score 760 which represents the similarity measure 132.

For the case of comparing dynamic writing (Figure 7B), the recurrent neural network 130 is made up of a Siamese architecture with two writing patterns used as inputs with 21 previously aligned temporal functions like the ones shown in Figure 6B. The first layer 710 is made up of two parallel hidden layers (712, 714) which are bidirectional LSTM with 42 memory blocks, each of which share the weights W (716) thereof. The outputs of this first layer 710 are concatenated 720 and are the input of the second layer 730 which is bidirectional LSTM with 84 memory blocks. A third layer 740 which is bidirectional LSTM is included, in this case with 168 memory blocks. The output of this layer, which has a size of 168 elements, constitutes the representation of the input sequence in the new characteristic space. This new representation is very compact and has no notion of time like the input sequence, but rather the temporal information is embedded inside of it. Finally, the output of this block enters a feed-forward layer 750 with sigmoid activation which produces an output score 760 from the comparison of the two initial inputs ($TAF_i$ and $TAF_T$).

e. This method is carried out iteratively on all the training sets 202 described in Figure 2 in order to be able to train the neural network and minimise the associated cost function thereof, which in this case is known as Binary Cross Entropy, and which is defined as follows:

$$E[ -(y \log(p) + (1-y) \log(1-p)) ] \qquad (6)$$

with y being the training tag (1 for genuine comparisons and 0 for impostor comparisons), p being the probability predicted by the system to be trained wherein the compared samples belong to the same identity (in other words, the similarity measure 760), and $E[\cdot]$ being the expected mathematical function.

It is important to note that with the training of this method, a single model or classifier is generated between genuine samples and samples from different identities or imitations is generated, and not a model for each identity.

After this training step, a pretrained model of the recurrent neural network is generated, which is the one used in the verification phase in order to compare the samples. This training process is performed globally for all the users of the training set of the system and, therefore, a single model of the neural network is obtained. However, it could occur that given a set of training samples of a certain user, a specific recurrent neural network model was trained for that user, thus generating a unique model or specific model for each user.

Finally, once the training process has been performed, the model created can be used to compare the signature or writing samples. In this case, once the samples to be compared by the system are introduced, the recurrent neural network obtains a similarity measure 132 between the recorded samples and the test sample, which is compared with a certain decision threshold to verify the identity 140 of the test sample. If the similarity measure 132 does not exceed the threshold value, the system then indicates that the test sample belongs to an identity different than the set with which it is compared; and if it exceeds said threshold value, the system indicates that the test sample belongs to the same identity as the rest of the samples with which it is compared. In the particular example shown in Figures 7A and 7B, only one recorded sample is compared (aligned recorded pattern $TAF_i$) with one test sample ($TAF_T$ aligned test pattern). However, in general, N recorded samples ($TAF_1$, $TAF_2$, ..., $TAF_N$) can be compared simultaneously with a test sample TAF$_T$.

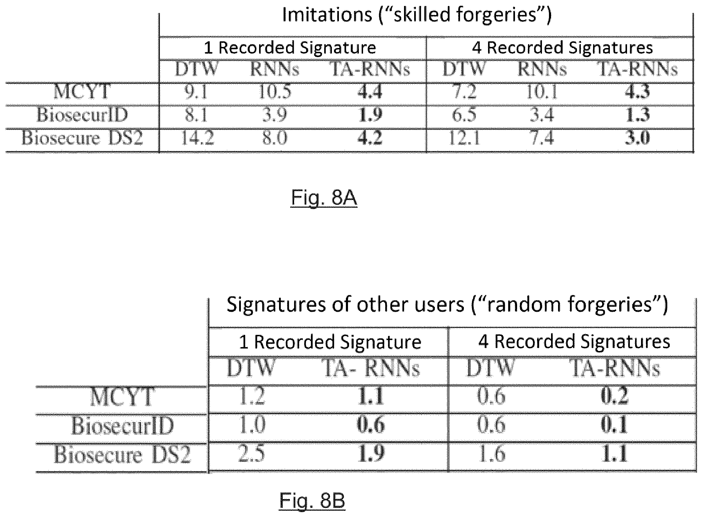

**Figure 8A** shows the performance (based on the EER) of systems based on DTW, RNN and prior time-aligned RNN (TA-RNN, which corresponds to the method of the present invention) for verifying handwritten dynamic signature using three databases (MCYT, BiosecurID and Biosecure DS2), for the case of comparing with imitations (skilled forgeries). Furthermore, the case of comparing a recorded signature against a test signature is included, as well as the case of four recorded signatures against a test signature. **Figure 8B** shows the same, but for the case of comparing genuine signatures of a user with signatures of other users (random forgeries). The results shown in Figures 8A and 8B, for the case of comparing four recorded samples against a test sample were obtained by means of four comparisons of a different recorded sample ($S_1$, $S_2$, $S_3$, $S_4$) against the test sample (i.e., $S_1$ vs $S_T$, $S_2$ vs $S_T$, $S_3$ vs $S_T$, $S_4$ vs $S_T$), and then the mean was taken in order to obtain the final score or similarity measure 132. However, in another embodiment, a recurrent neural network can be trained to take four recorded samples and one test sample as simultaneous inputs and thus obtain a one-time score.

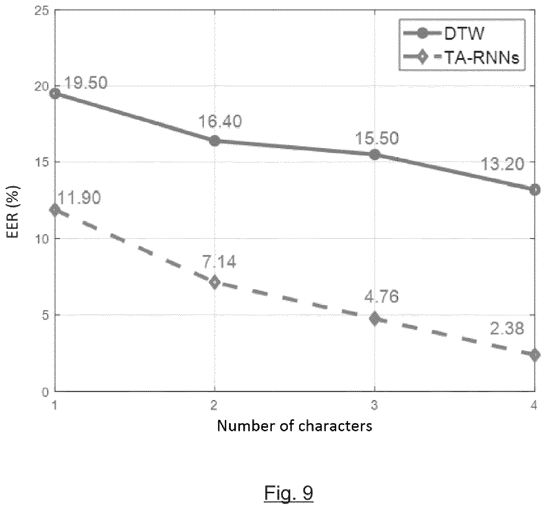

The results have been obtained on an evaluation set made up of about 274,000 comparisons from a total of 442 users. In all cases, the method of the present invention (TA-RNN) obtains significantly lower error results compared to previous methods. The proposed TA-RNN system carries out an improvement in the training process of the recurrent network through a previous pre-alignment of the samples, which achieves a very significant increase in performance. **Figure 9** shows EER values for a DTW-based system compared to the system proposed in the present invention based on time-aligned RNN (TA-RNN) for comparing passwords handwritten with fingers based on the length of the password (number of characters). These results have been obtained for an evaluation set made up of a total of about 42,000 comparisons from a total of 85 users. For all the password sizes considered, the TA-RNN system obtains significantly lower error results than the DTW-based system. For example, for the case of 3-character passwords, the TA-RNN system obtains a relative reduction of 70% in errors compared to the DTW-based system (EER of 15.50% vs 4.76%). In general, the TA-RNN system obtains on average relative improvements of over 50% in error reduction (EER) for passwords of 1 to 9 characters and obtains an EER value of 2.4% for the case of considering passwords of 4 characters.

## Claims

1.    A method for verifying dynamic handwriting and signatures, **characterised in that** it comprises the following steps:

    extraction of temporal functions (110) from a set of samples consisting of at least one recorded sample ($S_i$) belonging to a certain identity and a test sample ($S_T$), obtaining at least one recorded pattern ($TF_i$) and a test pattern ($TF_T$), wherein the extraction of temporal functions (110) is performed starting from dynamic information acquired for each sample, wherein the dynamic information includes at least temporal samplings of the X and Y coordinates of the sample;
    temporal alignment (120) of the at least one recorded pattern ($TF_i$) with the test pattern ($TF_T$), obtaining at least one aligned recorded pattern ($TAF_i$) and an aligned test pattern ($TAF_T$);
    comparison of the aligned patterns ($TAF_i$, $TAF_T$) by using a previously trained recurrent neural network (130) with a Siamese architecture, obtaining a similarity measure (132) between the at least one recorded sample ($S_i$) and the test sample ($S_T$); and
    verification of the identity (140) of the test sample ($S_T$) based on a comparison of the similarity measure (132) with a threshold value.

2.    The method according to claim 1, wherein the comparison of the aligned patterns ($TAF_i$, $TAF_T$) comprises:

    for each recorded sample ($S_i$), comparing the aligned recorded pattern ($TAF_i$) corresponding to said recorded sample ($S_i$) with the aligned test pattern ($TF_T$) by using a recurrent neural network (130) with two inputs;
    obtaining a similarity measure (132) by means of computing a value using the comparisons performed.

3.    The method according to claim 1, wherein there is a plurality N of recorded samples (Si), and wherein the comparison of the aligned patterns ($TAF_i$, $TAF_T$) comprises comparing a plurality N of aligned recorded patterns ($TAF_i$) corre- sponding to the recorded samples (Si) with the aligned test pattern ($TAF_T$) by using a Siamese recurrent neural network (130) with N+1 inputs.

4.    The method according to any of the preceding claims, comprising a previous step of training the recurrent neural network (130) iteratively by minimising a cost function, using a plurality of training sets (202) formed from a sample database (200) which stores a set of recorded samples ($S_i$) and test samples ($S_T$) corresponding to different identities, wherein each training set (202) comprises one or more recorded samples ($S_i$) corresponding to one same identity I and a test sample ($S_T$) corresponding to said identity I or to a different identity.

5. The method according to any of the preceding claims, wherein the basic dynamic information includes temporal samplings of the pressure (P) of the sample.

6. The method according to any of the preceding claims, wherein the temporal alignment (120) is performed by using a temporal alignment algorithm.

7. The method according to any of the preceding claims, wherein the verification of the identity (140) of the test sample ($S_T$) comprises:

   determining that the identity of the test sample ($S_T$) is the same as the identity of the at least one recorded sample ($S_i$) if the similarity measure (132) exceeds the threshold value;
   determining that the identity of the test sample ($S_T$) is different than the identity of the at least one recorded sample ($S_i$) if the similarity measure (132) does not exceed the threshold value.

8. The method according to any of claims 1 to 7, wherein the samples are dynamic handwritten signatures (302).

9. The method according to any of claims 1 to 7, wherein the samples are dynamic handwriting (304).

10. A system for verifying dynamic handwriting and signatures, comprising at least one memory, at least one programme stored in memory, and one or more processors configured to execute at least one programme, **characterised in that** the at least one programme includes instructions for carrying out the method of claims 1 to 9.

11. A programme product for verifying dynamic handwriting and signatures, comprising programme instruction means for carrying out the method defined in any of claims 1 to 9 when the programme is executed on one or more processors.

12. The programme product according to claim 11, stored on a programme support medium.

**Patentansprüche**

1. Verfahren zum Überprüfen von dynamischen Handschriften und Unterschriften, **dadurch gekennzeichnet, dass** es folgende Schritte umfasst:

   Extrahieren von zeitlichen Funktionen (110) aus einem Satz von Proben, der aus mindestens einer aufgezeichneten Probe ($S_i$), die zu einer bestimmten Identität gehört, und einer Testprobe ($S_T$) besteht, wobei mindestens ein aufgezeichnetes Muster ($TF_i$) und ein Testmuster ($TF_T$) erhalten werden, wobei das Extrahieren von zeitlichen Funktionen (110) ausgehend von dynamischen Informationen durchgeführt wird, die für jede Probe erfasst werden, wobei die dynamischen Informationen mindestens zeitliche Probeentnahmen der X- und Y-Koordinaten der Probe einschließen;
   zeitliches Ausrichten (120) des mindestens einen aufgezeichneten Musters ($TF_i$) mit dem Testmuster ($TF_T$), wobei mindestens ein ausgerichtetes aufgezeichnetes Muster ($TAF_i$) und ein ausgerichtetes Testmuster ($TAF_T$) erhalten werden;
   Vergleichen der ausgerichteten Muster ($TAF_i$, $TAF_T$) unter Verwendung eines zuvor trainierten rekurrenten neuronalen Netzes (130) mit einer siamesischen Architektur, wobei ein Ähnlichkeitsmaß (132) zwischen der mindestens einen aufgezeichneten Probe ($S_i$) und der Testprobe ($S_T$) erhalten wird; und
   Überprüfen der Identität (140) der Testprobe ($S_T$) auf der Grundlage eines Vergleichs des Ähnlichkeitsmaßes (132) mit einem Schwellenwert.

2. Verfahren nach Anspruch 1, wobei das Vergleichen der ausgerichteten Muster ($TAF_i$, $TAF_T$) Folgendes umfasst:

   für jede aufgezeichnete Probe ($S_i$), das Vergleichen des ausgerichteten aufgezeichneten Musters ($TAFi$), das der aufgezeichneten Probe ($S_i$) entspricht, mit dem ausgerichteten Testmuster ($TF_T$) unter Verwendung eines rekurrenten neuronalen Netzes (130) mit zwei Eingängen;
   Erhalten eines Ähnlichkeitsmaßes (132) mittels der Berechnung eines Wertes unter Verwendung der durchgeführten Vergleiche.

**3.** Verfahren nach Anspruch 1, wobei es eine Vielzahl N von aufgezeichneten Proben (Si) gibt und wobei der Vergleich der ausgerichteten Muster ($TAF_i$, $TAF_T$) das Vergleichen einer Vielzahl N von ausgerichteten aufgezeichneten Mustern (TAFi), die den aufgezeichneten Proben ($S_i$) entsprechen, mit dem ausgerichteten Testmuster ($TAF_T$) unter Verwendung eines siamesischen rekurrenten neuronalen Netzes (130) mit N+1 Eingängen umfasst.

**4.** Verfahren nach einem der vorhergehenden Ansprüche, umfassend einen vorherigen Schritt des iterativen Trainings des rekurrenten neuronalen Netzes (130) durch Minimierung einer Kostenfunktion unter Verwendung einer Vielzahl von Trainingssätzen (202), die aus einer Probendatenbank (200) gebildet werden, die einen Satz von aufgezeichneten Proben ($S_i$) und Testproben ($S_T$) speichert, die verschiedenen Identitäten entsprechen, wobei jeder Trainingssatz (202) eine oder mehrere aufgezeichnete Proben ($S_i$), die einer gleichen Identität I entsprechen, und eine Testprobe ($S_T$) umfasst, die der Identität I oder einer verschiedenen Identität entspricht.

**5.** Verfahren nach einem der vorhergehenden Ansprüche, wobei die grundlegende dynamische Information zeitliche Probeentnahmen des Drucks (P) der Probe einschließt.

**6.** Verfahren nach einem der vorhergehenden Ansprüche, wobei die zeitliche Ausrichtung (120) unter Verwendung eines Algorithmus für die zeitliche Ausrichtung durchgeführt wird.

**7.** Verfahren nach einem der vorhergehenden Ansprüche, wobei das Überprüfen der Identität (140) der Testprobe ($S_T$) Folgendes umfasst:

Bestimmen, dass die Identität der Testprobe ($S_T$) die gleiche ist wie die Identität der mindestens einen aufgezeichneten Probe ($S_i$), wenn das Ähnlichkeitsmaß (132) den Schwellenwert überschreitet;
Bestimmen, dass die Identität der Testprobe ($S_T$) sich von der Identität der mindestens einen aufgezeichneten Probe ($S_i$) unterscheidet, wenn das Ähnlichkeitsmaß (132) den Schwellenwert nicht überschreitet.

**8.** Verfahren nach einem der Ansprüche 1 bis 7, wobei die Proben dynamische handschriftliche Unterschriften (302) sind.

**9.** Verfahren nach einem der Ansprüche 1 bis 7, wobei die Proben dynamische Handschriften (304) sind.

**10.** System zum Überprüfen von dynamischer Handschrift und Unterschriften, das mindestens einen Speicher, mindestens ein im Speicher gespeichertes Programm und einen oder mehrere Prozessoren umfasst, die ausgebildet sind, um mindestens ein Programm auszuführen, **dadurch gekennzeichnet, dass** das mindestens eine Programm Anweisungen zum Durchführen des Verfahrens der Ansprüche 1 bis 9 einschließt.

**11.** Programmprodukt zum Überprüfen von dynamischer Handschrift und Unterschriften, umfassend Programm-Anweisungsmittel zum Durchführen des Verfahrens, das in einem der Ansprüche 1 bis 9 definiert ist, wenn das Programm auf einem oder mehreren Prozessoren ausgeführt wird.

**12.** Programmprodukt nach Anspruch 11, gespeichert auf einem Programmträgermedium.

**Revendications**

**1.** Procédé de vérification de signatures et d'écritures manuscrites dynamiques, **caractérisé en ce qu'**il comprend les étapes suivantes :

extraction de fonctions temporelles (110) à partir d'un ensemble d'échantillons constitué par au moins un échantillon enregistré ($S_i$) appartenant à une certaine identité et un échantillon de test ($S_T$), obtenant au moins un motif enregistré ($TF_i$) et un motif de test ($TF_T$), dans lequel l'extraction de fonctions temporelles (110) est effectuée à partir d'informations dynamiques acquises pour chaque échantillon, dans lequel les informations dynamiques comportent au moins des échantillonnages temporels des coordonnées X et Y de l'échantillon ;
alignement temporel (120) de l'au moins un motif enregistré ($TF_i$) avec le motif de test ($TF_T$), obtenant au moins un motif enregistré aligné ($TAF_i$) et un motif de test aligné ($TAF_T$) ;
comparaison des motifs alignés ($TAF_i$, $TAF_T$) en utilisant un réseau neuronal récurrent préalablement entraîné (130) avec une architecture siamoise, obtenant une mesure de similarité (132) entre l'au moins un échantillon enregistré ($S_i$) et l'échantillon de test ($S_T$) ; et

vérification de l'identité (140) de l'échantillon de test ($S_T$) sur la base d'une comparaison de la mesure de similarité (132) avec une valeur de seuil.

2. Procédé selon la revendication 1, dans lequel la comparaison des motifs alignés ($TAF_i$, $TAF_T$) comprend :

    pour chaque échantillon enregistré ($S_i$), comparaison du motif enregistré aligné ($TAF_i$) correspondant audit échantillon enregistré ($S_i$) avec le motif de test aligné ($TF_T$) en utilisent un réseau neuronal récurrent (130) avec deux entrées ;
    obtention d'une mesure de similarité (132) au moyen de calcul d'une valeur en utilisant les comparaisons effectuées.

3. Procédé selon la revendication 1, dans lequel il y a une pluralité N d'échantillons enregistrés ($S_i$), et dans lequel la comparaison des motifs alignés ($TAF_i$, $TAF_T$) comprend la comparaison d'une pluralité N de motifs alignés enregistrés ($TAF_i$) correspondants aux échantillons enregistrés ($S_i$) avec le motif de test aligné ($TAF_T$) en utilisant un réseau neuronal récurrent siamois (130) avec N+1 entrées.

4. Procédé selon l'une quelconque des revendications précédentes, comprenant un étape préalable d'entraînement du réseau neuronal récurrent (130) de façon itérative en minimisant une fonction de coût, en utilisant une pluralité d'ensembles d'entraînement (202) formés à partir d'une base de données d'échantillons (200) qui stocke un ensemble d'échantillons enregistrés ($S_i$) et d'échantillons de test ($S_T$) correspondants à différentes identités, dans lequel chaque ensemble d'entraînement (202) comprend un ou plusieurs échantillons enregistrés ($S_i$) correspondants à une même identité I et un échantillon de test ($S_T$) correspondant à ladite identité I ou à une identité différente.

5. Procédé selon l'une quelconque des revendications précédentes, dans lequel les informations dynamiques de base comportent des échantillonnages temporels de la pression (P) de l'échantillon.

6. Procédé selon l'une quelconque des revendications précédentes, dans lequel l'alignement temporel (120) est effectué en utilisant un algorithme d'alignement temporel.

7. Procédé selon l'une quelconque des revendications précédentes, dans lequel la vérification de l'identité (140) de l'échantillon de test ($S_T$) comprend :

    détermination que l'identité de l'échantillon de test ($S_T$) est la même que l'identité de l'au moins un échantillon enregistré ($S_i$) si la mesure de similarité (132) dépasse la valeur de seuil ;
    détermination que l'identité de l'échantillon de test ($S_T$) est différente de l'identité de l'au moins un échantillon enregistré ($S_i$) si la mesure de similarité (132) ne dépasse pas la valeur de seuil.

8. Procédé selon l'une quelconque des revendications 1 à 7, dans lequel les échantillons sont des signatures manuscrites dynamiques (302).

9. Procédé selon l'une quelconque des revendications 1 à 7, dans lequel les échantillons sont une écriture manuscrite dynamique (304).

10. Système de vérification de signatures et d'écritures manuscrites dynamiques, comprenant au moins une mémoire, au moins un programme stocké dans la mémoire, et un ou plusieurs processeurs configurés pour exécuter au moins un programme, **caractérisé en ce que** l'au moins one programme comporte des instructions pour mettre en oeuvre le procédé selon les revendications 1 à 9.

11. Produit de programme de vérification de signatures et d'écritures manuscrites dynamiques, comprenant des moyens d'instructions de programme pour mettre en oeuvre le procédé défini selon l'une quelconque des revendications 1 à 9 lorsque le programme est exécuté sur un ou plusieurs processeurs.

12. Produit de programme selon la revendication 11, stocké dans un support de programme.

Fig. 1

EP 4 095 749 B1

**SAMPLE DATABASE 200**

| IDENTITY A | IDENTITY B | IDENTITY C |
|---|---|---|
| RECORDED SAMPLES | RECORDED SAMPLES | RECORDED SAMPLES |
| TEST SAMPLES | TEST SAMPLES | TEST SAMPLES |

| IDENTITY D | IDENTITY E | IDENTITY F |
|---|---|---|
| RECORDED SAMPLES | RECORDED SAMPLES | RECORDED SAMPLES |
| TEST SAMPLES | TEST SAMPLES | TEST SAMPLES |

~202

**TRAINING SET 1**

N RECORDED SAMPLES IDENTITY C

1 TEST SAMPLE IDENTITY F

**TRAINING SET R**

N RECORDED SAMPLES IDENTITY A

1 TEST SAMPLE IDENTITY B

202

Fig. 2

Fig. 3A

CHARACTER S₁

CHARACTER S₂

EP 4 095 749 B1

Fig. 3B

400

| # | Temporal Function |
|---|---|
| 1 | X coordinate: $x_n$ |
| 2 | Y coordinate: $y_n$ |
| 3 | Pressure: $z_n$ |
| 4 | Trajectory angle of the tangent: $\theta_n$ |
| 5 | Magnitude of the velocity: $v_n$ |
| 6 | Curvature ratio Log: $\rho_n$ |
| 7 | Magnitude of the acceleration: $a_n$ |
| 8-14 | Derived from 1st order of temp. functions 1-7: $\dot{x}_n, \dot{y}_n, \dot{z}_n, \dot{\theta}_n, \dot{v}_n, \dot{\rho}_n, \dot{a}_n$ |
| 15-16 | Derived from 2nd order of temp. functions 1-2: $\ddot{x}_n, \ddot{y}_n$ |
| 17 | Ratio of the minimum over the maximum velocity in a 5-sample window: $v_n^r$ |
| 18-19 | Angle of consecutive samples and the first derivative thereof: $\alpha_n, \dot{\alpha}_n$ |
| 20 | Sine of 18: $s_n$ |
| 21 | Cosine of 18: $c_n$ |
| 22 | Ratio between Stroke length and length over a 5-sample window: $r_n^5$ |
| 23 | Ratio between Stroke length and length over a 7-sample window: $r_n^7$ |

<u>Fig. 4</u>

Fig. 5A

Fig. 5B

Fig. 6A

$TAF_T$

$TAF_1$

Fig. 6B

130

Output score                                                    760

Feed-Forward Layer
Sigmoid Activation                                             750

Hidden Layer
23 memory blocks                                               730

Concat                                                         720

710

Hidden Layer          W          Hidden Layer
46 memory                         46 memory
blocks                            blocks
712              716                              714

TAF$_i$                                    TAF$_T$

Fig. 7A

130

Output score                                                    760

Feed-Forward Layer
Sigmoid Activation                                             750

Hidden Layer
168 memory blocks                                              740

Hidden Layer
84 memory blocks                                               730

Concat                                                         720

710

Hidden Layer          W          Hidden Layer
42 memory                         42 memory
blocks                            blocks
712              716                              714

TAF$_i$                                    TAF$_T$

Fig. 7B

22

| Imitations ("skilled forgeries") | | | | | |
|---|---|---|---|---|---|
| 1 Recorded Signature | | | 4 Recorded Signatures | | |
| DTW | RNNs | TA-RNNs | DTW | RNNs | TA-RNNs |
| MCYT | 9.1 | 10.5 | **4.4** | 7.2 | 10.1 | **4.3** |
| BiosecurID | 8.1 | 3.9 | **1.9** | 6.5 | 3.4 | **1.3** |
| Biosecure DS2 | 14.2 | 8.0 | **4.2** | 12.1 | 7.4 | **3.0** |

Fig. 8A

| Signatures of other users ("random forgeries") | | | | |
|---|---|---|---|---|
| 1 Recorded Signature | | 4 Recorded Signatures | |
| DTW | TA- RNNs | DTW | TA-RNNs |
| MCYT | 1.2 | **1.1** | 0.6 | **0.2** |
| BiosecurID | 1.0 | **0.6** | 0.6 | **0.1** |
| Biosecure DS2 | 2.5 | **1.9** | 1.6 | **1.1** |

Fig. 8B

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. TOLOSANA ; R. VERA-RODRIGUEZ ; J. FIERREZ ; J. ORTEGA-GARCIA.** Exploring Recurrent Neural Networks for On-Line Handwritten Signature Biometrics. *IEEE Access,* 2018, vol. 6, 5128-5138
- **C. LI ; X. ZHANG ; F. LIN ; Z. WANG ; J. LIU ; R. ZHANG ; H. WANG.** A Stroke-based RNN for Writer-Independent Online Signature Verification. *Proc. International Conference on Document Analysis and Recognition (ICDAR),* 2019

- **C. SEKHAR ; P. MUKHERJEE ; D.S. GURU ; V. PULABAIGARI.** OSVNet: Convolutional Siamese Network for Writer Independent Online Signature Verification. *Proc. International Conference on Document Analysis and Recognition (ICDAR),* 2019